# EUROPÄISCHE PATENTANMELDUNG

(11) **EP 1 211 852 A2**
(43) Veröffentlichungstag der Anmeldung: **05.06.2002**
(21) Anmeldenummer: 01125223.6
(22) Anmeldetag: 24.10.2001
(51) Int. Cl.: H04L 12/56

(54) **Verfahren zur Datenübertragung**

(30) Priorität: 04.12.2000 DE 10060168
(71) Anmelder: BECKER GmbH, 76307 Karlsbad (DE)
(72) Erfinder: Becker, Michael, 76661 Philippsburg (DE); Lappe, Dirk, 76228, Karlsruhe (DE)
(74) Vertreter: Patentanwälte Westphal, Mussgnug & Partner

(57) **Zusammenfassung**

Um eine Kommunikation zwischen einem MOST-Netzwerk (1, 2) und einem externen Empfänger (E) und externen Sender (S), z. B. einem zweiten MOST-Netzwerk (2) zu ermöglichen, ist das MOST-Netzwerk (1, 2) an eine Schnittstelle (S1, S2) angeschlossen, die Daten im MOST-Standard in einen für den externen Empfänger (E) geeigneten Standard und vom externen Sender (S) empfangene Daten in den MOST-Standard transformiert.

## Beschreibung

Die Erfindung betrifft ein Verfahren zur Datenübertragung von einer in einem ringförmigen MOST-Netzwerk angeordneten Einheit zu einem externen Empfänger oder von einem externen Sender zum MOST-Netzwerk.

Die Erfindung betrifft weiter ein mehrere Einheiten vernetzendes ringförmiges MOST-Netzwerk.

Mit dem neuesten Stand der Technik ausgestattete Kraftfahrzeuge, z. B. PKW, LKW und Omnibusse, sind mit einer Multimediaanlage ausgerüstet, die z. B. aus einem sogenannten ringförmigen MOST-Netzwerk aufgebaut ist, das mehrere Einheiten miteinander vernetzt, die je nach Bedarf als Datenquelle, Datensenke oder als Transceiver dienen.

So kann ein MOST-Netzwerk in einem Kraftfahrzeug beispielsweise einen Rundfunkempfänger, einen Fernsehempfänger, einen Bildschirm, einen CD-Spieler, einen CD-Wechsler, einen DVD-Spieler, einen DVD-Wechsler, einen Cassettenrecorder, aktive Lautsprecher, eine Navigationsanlage, ein Autotelefon, ein schnurloses Telefon sowie Bedien- und Steuereinheiten miteinander vernetzen, um nur einige Beispiele für die Einheiten anzuführen.

Es ist daher Aufgabe der Erfindung, ein MOST-Netzwerk für die Übertragung von Daten zu einem externen Empfänger und für den Empfang von Daten eines externen Senders kompatibel zu gestalten.

Die Erfindung löst diese Aufgabe verfahrensmäßig mit den im Anspruch 1 angegebenen Merkmalen dadurch, dass eine an das MOST-Netzwerk angeschlossene Schnittstelle, die von der Einheit des MOST-Netzwerkes empfangenen Daten in einen für den externen Empfänger geeigneten Standard und von einem externen Sender empfangene Daten in den MOST-Standard transformiert.

Vorrichtungsmäßig löst die Erfindung diese Aufgabe mit den in Anspruch 2 angegebenen Merkmalen dadurch, dass zur Übertragung von Daten vom MOST-Netzwerk zu einem externen Empfänger und zum Empfang von Daten eines externen Senders eine Schnittstelle zur Transformation der Übertragungsstandards an das MOST-Netzwerk angeschlossen ist.

Die erfindungsgemäß an das MOST-Netzwerk angeschlossene Schnittstelle ermöglicht eine Datenübertragung vom MOST-Netzwerk zu einem beliebigen externen Empfänger und den Empfang von Daten von einem beliebigen externen Sender. Beispielsweise kann die Schnittstelle Daten im MOST-Standard in den Bluetooth-, DECT- oder in andere Standards sowie umgekehrt transformieren. Die Datenübertragung zwischen dem MOST-Netzwerk und dem externen Empfänger oder externen Sender erfolgt z. B. vorzugsweise drahtlos. Der externe Empfänger und der externe Sender können beispielsweise in einem Endgerät z. B. ein Personalcomputer oder ein schnurloses Telefon, vereinigt sein.

Die Erfindung wird nun anhand der Figuren beschrieben und erläutert.

In der Zeichnung zeigen:
- Figur 1: ein erstes Ausführungsbeispiel und
- Figur 2: ein zweites Ausführungsbeispiel der Erfindung.

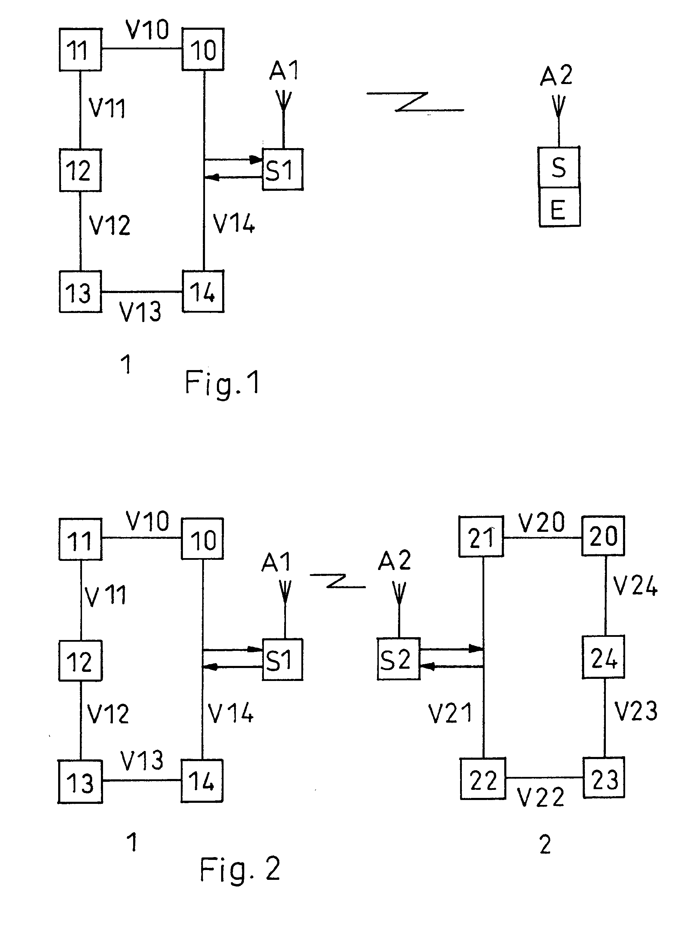

In der Figur 1 ist ein MOST-Netzwerk mit mehreren durch Verbindungsabschnitte V10 bis V14 miteinander vernetzten Einheiten 10 bis 14 gezeigt. An das MOST-Netzwerk ist eine Schnittstelle S1 mit einer Antenne A1 angeschlossen. Ein externer Empfänger E und ein externer Sender S sind an eine Antenne A2 angeschlossen. Mittels der beiden Antennen A1 und A2 können das MOST-Netzwerk sowie der externe Empfänger E und der externe Sender S über eine Funkverbindung miteinander kommunizieren. Der externe Empfänger E und der externe Sender S können zum Beispiel in einem Personalcomputer oder einem schnurlosen Telefon vereinigt sein.

In der Figur 2 ist ein zweites Ausführungsbeispiel der Erfindung gezeigt, bei welchem der externe Empfänger und der externe Sender ein zweites MOST-Netzwerk darstellen.

In einem ersten MOST-Netzwerk 1 sind mehrere Einheiten 10 bis 14 über Verbindungsabschnitte V10 bis V14 miteinander vernetzt. An das erste MOST-Netzwerk 1 ist eine Schnittstelle S1 mit einer Antenne A1 angeschlossen.

In einem zweiten MOST-Netzwerk 2 sind ebenfalls mehrere Einheiten 20 bis 24 über Verbindungsabschnitte V20 bis V24 miteinander vernetzt. Eine Schnittstelle S2 mit einer Antenne A2 ist an das zweite MOST-Netzwerk 2 angeschlossen.

Mittels der beiden Schnittstellen S1 und S2 ist eine Datenübertragung in beide Richtungen zwischen beliebigen Einheiten des ersten MOST-Netzwerkes 1 und des zweiten MOST-Netzwerkes 2 möglich. Mit dem erfindungsgemäßen MOST-Netzwerk ausgerüstete Fahrzeuge können daher miteinander kommunizieren. Die Übertragung der Daten zwischen den beiden MOST-Netzwerken erfolgt vorzugsweise drahtlos im Bluetooth-Standard.

### Bezugszeichenliste

- A1: Antenne
- A2: Antenne
- S1: Schnittstelle
- S2: Schnittstelle
- V10 - V14: Verbindungsabschnitt
- V20 - V24: Verbindungsabschnitt
- 1: MOST-Netzwerk
- 2: MOST-Netzwerk
- 10 - 14: Einheit
- 20 - 24: Einheit
- E: externer Empfänger
- S: externer Sender

## Patentansprüche

1. Verfahren zur Datenübertragung von einer in einem ringförmigen MOST-Netzwerk (1, 2) angeordneten Einheit (10-14, 20-24) zu einem externen Empfänger (E) oder von einem externen Sender (S) zum MOST-Netzwerk (1, 2),
**dadurch gekennzeichnet , dass** eine an
das MOST-Netzwerk (1, 2) angeschlossene Schnittstelle (S1, S2) die von der Einheit des MOST-Netzwerkes (1, 2) empfangenen Daten in einen für den externen Empfänger (E) geeigneten Standards und die vom externen Sender (S) empfangenen Daten in den MOST-Standard transformiert.

2. Mehrere Einheiten (10-14, 20-24) vernetzendes ringförmiges MOST-Netzwerk (1, 2),
**dadurch gekennzeichnet , dass** zur Übertragung von Daten vom MOST-Netzwerk (1, 2) zu einem externen Empfänger (E) und zum Empfang von Daten eines externen Senders (S) eine Schnittstelle (S1, S2) zur Transformation der Übertragungsstandards an das MOST-Netzwerk (1, 2) angeschlossen ist.

3. Verfahren nach Anspruch 1,
**dadurch gekennzeichnet , dass** die Datenübertragung vom MOST-Netzwerk (1, 2) zum externen Empfänger (E) und vom externen Sender (S) zum MOST-Netzwerk (1, 2) drahtlos erfolgt.

4. Verfahren bzw. MOST- Netzwerk nach Anspruch 1, 2 oder 3,
**dadurch gekennzeichnet , dass** der externe Empfänger (E) und der externe Sender (S) eine Einheit darstellen.

5. Verfahren bzw. MOST-Netzwerk nach Anspruch 4,
**dadurch gekennzeichnet , dass** der externe Empfänger (E) und der externe Sender (S) in einem Endgerät vereinigt sind.

6. Verfahren bzw. MOST-Netzwerk nach Anspruch 4 oder 5,
**dadurch gekennzeichnet , dass** der externe Empfänger (E) und der externe Sender (S) ein zweites MOST-Netzwerk (2) ist.

7. Verfahren oder MOST-Netzwerk nach einem der vorangehenden Ansprüche,
**dadurch gekennzeichnet , dass** die
Schnittstelle (S1, S2) Daten im MOST-Standard in Daten im Bluetooth-Standard oder im DECT-Standard transformiert und umgekehrt.
